# EUROPÄISCHE PATENTSCHRIFT

(11) **EP 0 730 846 B1**
(45) Veröffentlichungstag und Bekanntmachung des Hinweises auf die Patenterteilung: **18.09.2002**
(21) Anmeldenummer: 96102012.0
(22) Anmeldetag: 12.02.1996
(51) Int. Cl.: A61C 13/097

(54) **Zahnsatz**
Teeth arrangement
Arrangement de dents

(30) Priorität: 10.03.1995 DE 19508762
(43) Veröffentlichungstag der Anmeldung: 11.09.1996
(73) Patentinhaber: Ivoclar Vivadent AG, 9494 Schaan (LI)
(72) Erfinder: Foser, Hans Peter, FL 9496 Balzers (LI)
(74) Vertreter: Splanemann Reitzner Baronetzky Westendorp Patentanwälte

(56) Entgegenhaltungen:
- WO-A-96/07365
- GB-A- 130 870
- US-A- 1 665 357
- US-A- 3 755 898
- US-A- 4 445 863

## Beschreibung

Die Erfindung betrifft einen Zahnsatz gemäß dem Oberbegriff von Anspruch 1.

Aus der nicht vorveröffentlichten WO/96/07365 ist ein Zahnsatz bekannt, bei der in der Schließstellung ein punktförmiger Kontakt gegeben sein soll. Der punktförmige Kontakt soll in einer Ruhezone erfolgen. Durch den Punktkontakt ergibt sich zwar eine Druckwirkung; eine Zentrierung in die Ruhestellung ist jedoch aus dieser Lösung nicht bekannt.

Ein derartiger Zahnsatz ist aus der CH-PS-405 601 bekannt. Die Kauwirkung der Zähne ist relativ gut, wenn eine Mahlfunktion im Vordergrund steht, da sie nach dem Mörser-Pistill-Prinzip arbeiten. Die Kauwirkung läßt jedoch stark nach, wenn faserige Substanzen, wie beispielsweise faserorientiertes Fleisch oder entsprechendes Gemüse, zwischen den vorgefertigten Zähnen gemäß der CH-PS-405 601 durch Käuen zerkleinert werden soll. Bei dem vorbekannten Zahnsatz soll eine motorische Ruhe dadurch hergestellt werden, daß die Krümmungsradien bei aufeinander auftreffenden konvexen Oberflächen erheblich kleiner gewählt werden als bei konkaven Oberflächen. Eine derartige Ausgestaltung schließt jedoch nicht aus, daß beispielsweise ein Oberkiefer-Höcker auf den mesio-distalen Rand eines Unterkiefers gelangt, was von der Belastungssituation des Zahnes her ungünstig ist, aber auch der motorischen Ruhe abträglich ist.

Es ist bekannt, daß der Unterkiefer beim Kauvorgang eine spezielle, sich im Raum erstreckende Kurve durchläuft, die als Kauschlaufe bezeichnet wird. Bezogen beispielsweise auf die Unterkiefer-Molaren bewirkt die Kauschlaufe kurz vor der Okklusion eine Schrägbewegung sowohl in lingualer oder bukkaler Richtung als auch in distaler Richtung des Unterkiefers gegenüber dem Oberkiefer. Aufgrund dieses Versatzes kommen die Antagonisten regelmäßig zunächst an ihren Höckern in Kontakt, und zwar regelmäßig auf der Seite, auf welcher weniger Speise zerkleinert wird, der sogenannten Balanceseite. Bei den natürlichen Zähnen ist die Höckerneigung nun so, daß die Balanceseite auch die Arbeitsseite durch die Wirkung des Musculus masseter und des Musculus pterygoideus medialis in die sogenannte balancierte Okklusion zieht. Die Abstützung auf der Balanceseite hat den Vorteil, daß die Arbeitsseite nach dem Prinzip des einarmigen Hebels mit relativ geringer Muskelkraft eine große Kauwirkung ermöglicht.

Diesem Prinzip wird der aus der CH-PS-405 601 bekannte Zahnsatz nicht oder nur in geringem Maße gerecht. Durch die konkave Ausgestaltung mit relativ großen Radien erfolgt keine oder nur eine geringe Führungsfunktion auf der Balanceseite. Zudem kann es sogar vorkommen, daß der Stampfhöcker lingual des lingualen Höckers des Antagonisten gerät und eine Fehlokklusion zustandekommt.

Natürliche Zähne unterliegen bei Annäherung an die Okklusionsstellung einer Front-Eckzahnführung, die eine definierte Okklusionslage aufgrund der guten Führungskraft natürlicher Eckzähne erlaubt. Es ist bekannt, dieses Konzept der Front-Eckzahnführung auch bei künstlichen Zähnen zu realisieren. Im Fall der Vollprothetik werden hierdurch jedoch vergleichsweise große seitliche Kräfte im.vorderen Bereich der Prothese eingeleitet, die zwischen Kiefer und Prothese nur unzureichend auffangbar sind. Die Prothese gleitet dementsprechend in einer horizontalen Ebene, was jedoch schmerzverursachend und gewebeschädlich sein kann. Im Falle der Teilprothetik wäre es jedoch wünschenswert, auch dieses Konzept realisieren zu können, so daß der Zahnsatz sowohl für die Voll- als auch für die Teilprothetik einsetzbar ist.

Ferner ist aus der US-PS-3 755 898 ein Zahnsatz bekannt, der ebenfalls konvexe Flächen kleinerer Radien mit konkaven Flächen größerer Radien kombiniert. Darüber hinaus sind eine Vielzahl von Querfurchen vorgesehen, die je einseitig geschlossen und am lingualen oder bukkalen Ende offen sind, und über welche zerkleinerter Speisebrei herausgedrückt werden soll. Ein derartiger Zahnsatz weist im Grunde keinen Stampfhöcker, sondern praktisch eine Art Stampfleiste am Oberkiefer auf, die sich in mesio-distaler Richtung erstreckt.

Diese Zahnform erlaubt jedoch nicht die erwünschte motorische Ruhe, und vermag der mesio-distalen Bewegungskomponente gegen Ende der Kauschlaufe bei Annäherung an die Okklusionsstellung nicht zu folgen.

Zudem sind vergleichsweise scharfe Kanten ungünstig, wenn Keramikzähne mit natürlichen Zähnen kombiniert werden. Die Keramikzähne sind regelmäßig wesentlich härter als die natürlichen Zähne, so daß eine unerwünschte Abnutzung der natürlichen Zähne auftritt. Daher ist die aus der US-PS-3 755 898 bekannte Lösung im Grunde höchstens für Kunststoffzähne geeignet.

Demgegenüber liegt der Erfindung die Aufgabe zugrunde, einen Zahnsatz gemäß dem Oberbegriff von Anspruch 1 zu schaffen, der grundsätzlich sowohl für die Voll- als auch für die Teilprothetik geeignet ist, die Realisierung verschiedener Okklusionskonzepte ermöglicht und trotz industrieller Vorfertigung und verbesserter Kauwirkung universell anwendbar ist.

Diese Aufgabe wird erfindungsgemäß durch Anspruch 1 gelöst. Vorteilhafte Weiterbildungen ergeben sich aus den Unteransprüchen.

Besonders günstig ist es, daß mit der erfindungsgemäßen Zentrierung in Mehrfachkontakt-Interkuspidation, insbesondere in tripodisierter Interkuspidation eine verbesserte Kauwirkung mit geringeren Kaukräften erzielbar ist. Die Balanceseite gerät mit dem erfindungsgemäßen Zahnsatz ohne weiteres in die maximale Okklusionsstellung, so daß dann die Kauwirkung über den Musculus masseter auf der Arbeitsseite maximiert werden kann. Hierbei lassen sich durch die erfindungsgemäß konvex gewölbten Okklusionsflächen auch gut faserige Speisen zerkleinern, ohne daß beispielsweise für die Prämolaren ein schneidezahnähnliches Konzept verwirklicht werden müßte, um die Schneidfunktion zu diesen hin auszulagern.

Dennoch ist die Krafteinleitung auch bei Normalbiß optimiert. Es ist möglich, die Abstützung kurz vor der maximalen Kraftaufbringung, also kurz bevor cie Speise endgültig zerteilt ist, an mindestens zwei Berührungspunkten bzw. Annäherungspunkten, vorzugsweise drei Berührungspunkten bzw. Annäherungspunkten, zu halten, die im wesentlichen symmetrisch angeordnet sind. Die eingeleiteten Kraftvektoren neutralisieren sich dann bezogen auf die horizontale Ebene, und es ist lediglich darauf zu achten, daß der Zentrikpunkt etwa mittig zu Unterkieferund Oberkieferkamm ausgerichtet ist.

Erfindungsgemäß kann der Zahnsatz auch für die Teilprothetik verwendet werden, also bei einem natürlichen Zahn als Antagonisten. Hierbei läßt sich besonders günstig die Tatsache ausnutzen, daß die erfindungsgemäße Zentrierung auch bei natürlichen Zähnen als Antagonisten möglich ist. Durch Reduktion der Berührungsflächen auf die drei Berührungspunkte ist die Kauwirkung besonders gut, ohne daß eine Mahlfunktion ausgeschlossen wäre. In diesem Zusammenhang ist es besonders günstig, daß die Erfindung die Möglichkeit eröffnet, anschließend an die mindestens teilweise konvex gewölbten Bereiche konkav gewölbte Bereiche anzuschließen, die einen interkoronalen Freiraum erlauben. Hiermit läßt sich auch das Mörser-Pistill-Prinzip verwirklichen, und es versteht sich, daß das Anschließen sowohl in mesio-distaler als auch in bukko-lingualer Richtung erfolgen kann, und nicht je unbedingt in Richtung auf den von einer Zentralfossa aufragenden Höcker, sondern beispielsweise auch in Richtung einer Querfurche erfolgen kann.

Gemäß einer weiteren vorteilhaften Ausgestaltung ist es möglich, die mindestens zwei, vorzugsweise drei oder mehreren Berührungspunkte zwischen Stampfhöcker und Antagonisten durch eine Anlage zwischen einem bukkalen Unterkieferhöcker und der bukkalen Seite der Zentralfossa des Oberkiefers zu ermöglichen. Hierdurch wird die Krafteinleitung nach lingual verlagert, was für den Normalbiß günstig ist, und es erfolgt eine weitere Führung des Unterkiefers in lingualer Richtung, die auch verhindert, daß versehentlich ein Kreuzbiß zustandekommt.

Im Zusammenhang mit der Führung der Zähne in die Okklusionsstellung über die Balanceseite ist es besonders günstig, wenn der Abstand zwischen Zentralfossa und einem labialen Höcker der Molaren kleiner als der Abstand zwischen der Zentralfossa und dem bukkalen Höcker des betreffenden Unterkiefer-Antagonisten ist. Dann steht am Oberkiefer praktisch eine sehr breite Führungsfläche für die Führung der Balanceseite in die Interkuspidation zur Verfügung.

Eine Asymmetrie und ein transversaler oder sagittaler Versatz der Höcker und der sich an die Höcker anschließenden Vorwölbungen ist günstig, wenn es gilt, die Anlagepunkte der Zähne zu optimieren.

Besonders günstig ist es, wenn je eine definierte Kauflächenbreite zwischen etwa 5,7 und 7,0 mm für die Unterkiefer-Prämolaren und zwischen z.B. 5,9 und 6,8 mm für die Unterkiefer-Molaren, sowie zwischen etwa 4,8 und 7,3 mm für die Oberkiefer-Prämolaren und zwischen z.B. 6,2 und 7,8 mm für die Oberkiefer-Molaren vorgesehen ist. Hierdurch erfolgt eine bessere Lastverteilung gegenüber den bekannten, häufig recht schmalen Unterkiefer-Zähnen, wobei überraschend bei genau dieser Zahnbreite die optimale Kaufunktion vorliegt, unabhängig von der Größe des Zahnsatzes, der grundsätzlich in einer Mehrzahl von Größen vorgesehen sein kann, beispielsweise in fünf Größenabstufungen, die sich um beispielsweise je 5% in jeder Richtung voneinander unterscheiden.

Gemäß einer weiteren vorteilhaften Ausgestaltung ist es vorgesehen, daß der Stampfhöcker in eine Kreuzung zwischen Zentralfossa und Querfossa in der Interkuspidationsstellung gerät, die bei den Molaren vorgesehen ist. Die Zentral- und Querfossae erlauben eine gute Abführung der Speisereste und auch die Nachbenetzung mit Speichel, während es günstig ist, daß in den von den Fossae gebildeten Quadranten sich Vorwölbungen zu dem jeweiligen Höcker erstrecken, die als konvex gewölbte Bereiche wirken, und an die sich seitlich je konkav gewölbte Bereiche anschließen können.

Zum asymmetrischen Aufbau des Zahnsatzes gehört auch die Ausgestaltung von zwei gegeneinander versetzten Gruben, wie sie insbesondere an dem ersten Oberkiefer-Molaren vorgesehen sind, aber auch beispielsweise die mesiale bzw. distale Versetzung der lingualen bzw. bukkalen Höcker der ersten Oberkiefer-Prämolaren. Diese Versetzung kommt besonders der Laterotrusion zugute, da sich der Höcker der Unterkiefer-Prämolaren dann schräg nach seitlich innen bzw. außen bewegen kann, ohne mit dem Oberkiefer-Höcker in zu starke Kollision zu gelangen.

Dies gilt auch für die Verlagerung der lingualen Höcker der Unterkiefer-Molaren gegenüber den bukkalen Höckern zur Zahnperipherie hin, die eine freie Laterotrusionsbewegung ermöglichen.

Erfindungsgemäß ist es vorgesehen, daß sich über die gesamte Okklusionsfläche konkave und konvexe Bereiche abwechseln, was der freien harmonischen Bewegung zugute kommt.

Diese wird auch unterstützt durch die sagittale Verwindung der Höckerneigung vom ersten Prämolar bis zum zweiten Molar, durch welche die Höckerneigung kontinuierlich abnimmt und nicht nur die helicoidale Verwindung simuliert wird, sondern auch die Realisierung unterschiedlicher Okklusionskonzepte erleichtert wird.

In einer vorteilhaften Ausgestaltung ist es vorgesehen, daß in Okklusionsstellung die Stampfhöcker deutlich beabstandet von dem Rand der Kaufläche des Antagonisten eingreifen. Damit wird eine Belastung der Zahnperipherie und die hierdurch induzierte motorische Unruhe vermieden. Die Belastung kann beispielsweise innerhalb der mittleren 60% der mesio-distalen Länge der Kaufläche erfolgen, soweit in der Mitte also, daß mindestens 20% Abstand zwischen dem Belastungspunkt und dem Rand der Kaufläche bestehen.

Erfindungsgemäß ist eine statisch lokalisierte lingualisierte Interkuspidation vorgesehen, mit der sowohl den physiologischen und anatomischen als auch den ästhetischen Bedürfnissen Rechnung getragen werden kann. In diesem Zusammenhang ist es besonders günstig, daß die distal angeordneten Gruben der unteren Prämolaren das Interkuspidieren der lingualen Höcker der Oberkiefer-Antagonisten gestatten.

Durch das Vorsehen eines Stampfhöckers als Primärhöcker an dem Oberkieferzahn, sowie durch die zusätzliche Ausbildung eines Unterkiefer-Antagonisten-Höckers an der mesio-lingualen Position kann die Kauschlaufe an den dort ausgebildeten definierten Vorwölbungen zu Ende geführt werden, und Mahlokklusionen sowie Kippungen, wie sie bei außerhalb der zentralen Position angeordneten Führungsflächen stets zu befürchten sind, werden sicher vermieden.

Weitere Einzelheiten, Vorteile und Merkmale ergeben sich aus der nachstehenden Beschreibung eines Ausführungsbeispiels anhand der Zeichnung.

Es zeigen:
- Fig. 1: einen etwas schematisierten Schnitt durch eine erfindungsgemäße Anordnung von Molaren eines erfindungsgemäßen Zahnsatzes, die sich in tripodisierter Interkuspidation befinden;
- Fig. 2: eine okklusale Draufsicht auf ein Ausführungsbeispiel eines zweiten Oberkiefer-Molaren;
- Fig. 3: eine okklusale Draufsicht auf ein Ausführungsbeispiel eines ersten Oberkiefer-Molaren;
- Fig. 4: eine okklusale Draufsicht auf ein Ausführungsbeispiel eines zweiten Oberkiefer-Prämolaren;
- Fig. 5: eine okklusale Draufsicht auf ein Ausführungsbeispiel eines ersten Oberkiefer-Prämolaren;
- Fig. 6: eine okklusale Draufsicht auf ein Ausführungsbeispiel eines zweiten Unterkiefer-Molaren;
- Fig. 7: eine okklusale Draufsicht auf ein Ausführungsbeispiel eines ersten Unterkiefer-Molaren;
- Fig. 8: eine okklusale Draufsicht auf ein Ausführungsbeispiel eines zweiten Unterkiefer-Prämolaren;
- Fig. 9: eine okklusale Draufsicht auf ein Ausführungsbeispiel eines ersten Unterkiefer-Prämolaren; und
- Fig. 10: eine schematische Ansicht der Verwindung bei der Aufstellung eines erfindungsgemäßen Zahnsatzes.

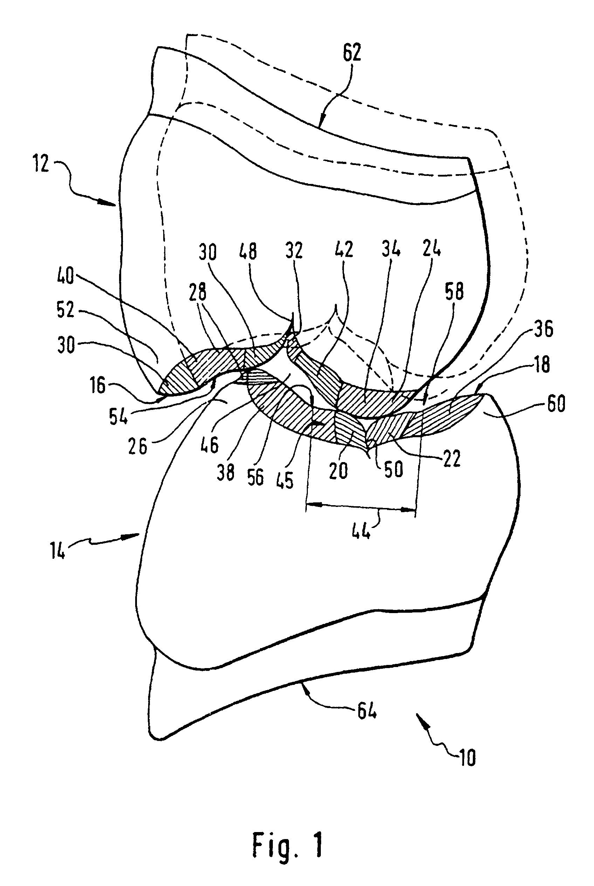

Ein erfindungsgemäßer Zahnsatz 10 weist einen Oberkiefer-Molaren 12 sowie einen Unterkiefer-Molaren 14 auf, die miteinander in Okklusion gelangen können. Beide Zähne weisen einander zugewandte Kauflächen oder Okklusionsflächen 16 und 18 auf. In der durchgezogenen Darstellung gemäß Fig. 1 befinden sich beide Zähne in tripodisierter Interkuspidation, in welcher konvexe Bereiche 20, 22 der Unterkiefer-Okklusionsfläche 18 in Anlage mit einem Stampfhöcker 24 des Oberkiefer-Molaren 12 geraten, der an lingualisierter Position vorgesehen ist. Die gestrichelte Darstellung des Oberkiefer-Molaren 12 soll den interkoronalen Freiraum deutlich werden lassen.

In dem in Fig. 1 dargestellten Ausführungsbeispiel gerät in tripodisierter Interkuspidation zusätzlich die Okklusionsfläche 18 an bukkaler Stelle in Anlage mit der Okklusionsfläche 16, nämlich an einem bukkalen Höcker 26 gegenüber einer lingual geneigten Schrägfläche der Okklusionsfläche 16 an dem Oberkiefer-Molar 12.

Wie aus Fig. 1 ersichtlich ist, wechseln einander konvexe Bereiche 20, 22, 28 am Unterkiefer-Molar 14 sowie konvexe Bereiche 30, 32, 34 am Oberkiefer-Molar 12 mit konkaven Bereichen 36, 38 am Unterkiefer-Molar 14 sowie konkaven Bereichen 40, 42 am Oberkiefer-Molar 12 ab. Hierdurch erstrecken sich seitlich der tripodisierten Interkuspidation Bewegungsbereiche, wie sie an dem Unterkiefer-Molar 14 mit dem Bewegungsbereich 44 angedeutet sind, und es ergibt sich ein interkoronaler Freiraum 46.

Der Bewegungsbereich 44 zusammen mit den daran anschließenden konkaven Bereichen 36 und 38, jedoch ausschließlich die bukkalen und lingualen Höcker 26 und 60 bilden praktisch eine Grube 45 für den Stampfhöcker 24.

Wie aus Fig. 1 ersichtlich ist, sind in der tripodisierten Interkuspidation eine Zentralfossa 48 des Oberkiefer-Molaren 12 und eine Zentralfossa 50 des Unterkiefer-Molaren 14 voneinander beabstandet. Die Okklusionsfläche 18 des Unterkiefer-Molaren 14 zur bukkalen Seite hin erstreckt sich jedoch relativ weit, so daß der bukkale Höcker 26 an der Gegenflanke bzw. einer dortigen Vorwölbung des bukkalen Höckers 52 des Oberkiefer-Molaren 12 in Anlage gerät.

Es versteht sich, daß die konkaven Einwölbungen 54 an dem Oberkiefer-Molar 12 sowie die Einwölbungen 56 und 58 an dem Unterkiefer-Molar 14 je nicht in gleicher Ebene zu den konvexen Bereichen 30, 32 bzw. 20 und 22 vorgesehen sein müssen. Dies ist aus Gründen der einfacheren zeichnerischen Darstellung hier so vorgesehen, während es gemäß einer vorteilhaften Ausgestaltung vorgesehen ist, die Einwölbungen 54 bis 58 in Zeichnungsebene versetzt auszubilden, so daß der interkoronale Freiraum 46 gleich auch eine Laterotrusionsbewegung mit abdeckt, und nicht lediglich in bukko-lingualer Richtung vorliegt.

Bevorzugt erstreckt sich der interkoronale Freiraum 46 primär in Richtung der Kauschlaufe bei Annäherung an die Okklusionsstellung, in begrenzterem Maße jedoch auch quer zu dieser.

In der Darstellung gemäß Fig. 1 sind ferner der bukkale Höcker 26 des Unterkiefer-Molaren 14 und der linguale Höcker 60 des Unterkiefer-Molaren 14 in einer Zeichnungsebene dargestellt, ebenso wie die entsprechenden bukkalen Höcker 52 und Stampfhöcker 24 des Oberkiefer-Molaren 12. In dem bevorzugten Ausführungsbeispiel ist jedoch der Stampfhöcker 24 etwas nach distal verlagert, was ebenfalls der Laterotrusion zugutekommt.

Ferner versteht es sich, daß die Darstellung gemäß Fig. 1 je die mesialen Höcker und Gruben betrifft. Die Molaren weisen erfindungsgemäß bevorzugt jedoch zusätzlich auch distale Höcker auf, die je von einer mehr oder weniger stark ausgeprägten Querfossa 70 von den mesialen Höckern getrennt sind und weniger stark zum Antagonisten hin vorspringen als diese. Durch diese Maßnahme läßt sich eine abgestufe Kaufunktion realisieren, die sicherstellt, daß bei geringem erforderlichen Kaudruck die gesamte Kaufläche zur Verfügung steht, um weiche Speisen zu zerkleinern, während, wenn es auf die Mahl- und Schneidfunktion ankommt, hauptsächlich der Stampfhöcker an dem Antagonisten arbeiten kann, und dies zudem in balancierter Okklusionsstellung.

Gemäß einer besonders bevorzugten Ausgestaltung ist es vorgesehen, Basalflächen 62 und 64 im wesentlichen gerade im Winkel von etwa 70° zur Horizontalen verlaufen zu lassen. Dies kommt der computergestützten Aufstellung der Zähne zugute.

Die Kauflächenbereite des Unterkiefer-Molaren 14, die sich von der Spitze des bukkalen Höckers 26 zu der Spitze des lingualen Höckers 60 erstreckt, beträgt im Falle der hier vorgestellten Ausführungsform 6,5 mm, woraus in etwa der Maßstab der Zähne des vorliegenden Ausführungsbeispiels entnehmbar ist.

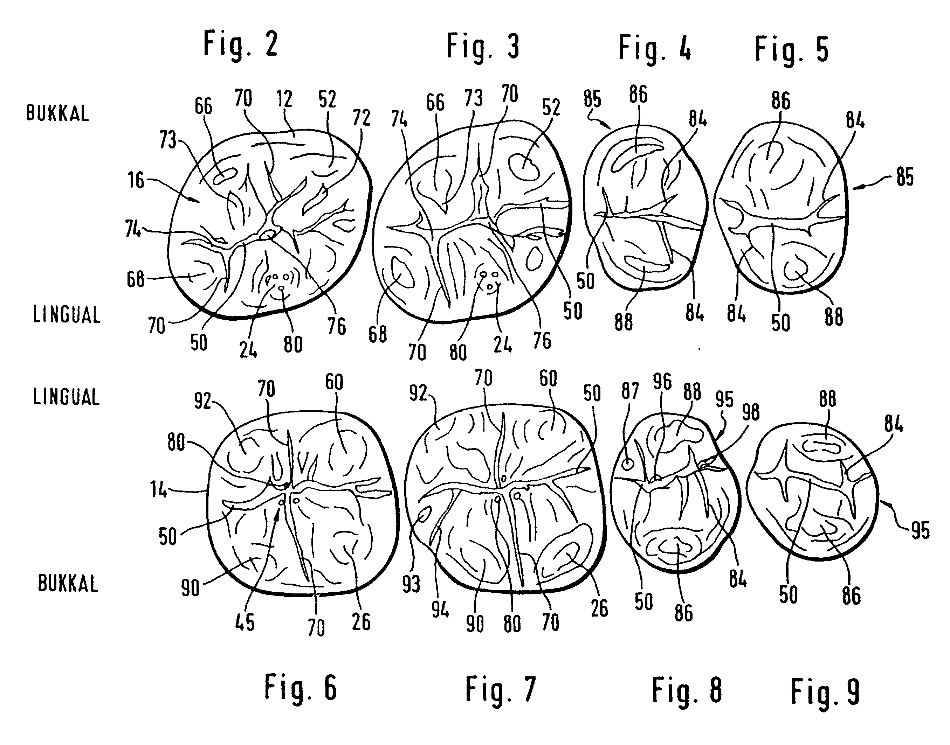

Die Ausgestaltung der Kaufläche 16 des zweiten Oberkiefer-Molaren 12 ist aus Fig. 2 ersichtlich. Der Molar weist an mesio-lingualer Stellung, die im Falle der Darstellung gemäß Fig. 2 unten rechts angeordnet ist, den mächtig ausgebildeten Stampfhöcker 24 auf, und an mesio-bukkaler Stelle den Höcker 52, der bevorzugt ebenfalls recht kräftig ausgebildet ist.

Demgegenüber zurücktretend sind an disto-bukkaler Stelle ein Höcker 66 und noch stärker zurücktretend an disto-lingualer Stelle ein Höcker 68 vorgesehen.

Fig. 2 zeigt, daß eine Zentralfossa 50 vorgesehen ist, die jedoch nicht geradlinig verläuft, sondern an mesialer Stelle gegenüber der distalen Stelle nach bukkal versetzt ist. Dies entspricht dem Versatz der Höcker 24, 52, 66 und 68 zueinander, die bezogen auf ihre jeweiligen Spitzen nahezu ein Parallelogramm aufspannen, während die entsprechenden, aus Fig. 6 ersichtlichen Unterkiefer-Höcker mit ihren Spitzen ein Rechteck aufspannen.

Die Zentralfossa 50 verzweigt sich zudem im Bereich zwischen dem Höcker 68 und dem Höcker 24 zu einer Querfossa 70, die ihre Fortsetzung in dem Bereich zwischen dem Höcker 52 und dem Höcker 66 findet. Gemäß dieser Ausgestaltung überschneiden sich Zentralfossa 50 und die Querfossa 70 in dem sich zwischen den Höckern 24 und 66 erstreckenden Ast.

Anschließend an die dargestellten Fossae und Höcker sind keine vollständig ebenen und glatten Flächen vorgesehen, sondern vielmehr durchaus auch Auswölbungen, Furchen und Leisten von denen eine Auswölbung 72 und eine Auswölbung 73 besonders ausgeprägt sind.

Aus Fig. 3 ist die entsprechende Ausgestaltung des ersten Oberkiefer-Molaren ersichtlich. Die hier verwendeten Bezugszeichen entsprechend denjenigen gemäß Fig. 2. Auch hier weisen Zentralfossa 50 und Querfossa 70 den seitlichen Versatz auf, entsprechend dem Versatz der Höcker 52, 66, 24 und 68 zueinander. Aus Fig. 2 und 3 ist ersichtlich, daß am Kreuzungspunkt der Zentralfossa 50 bzw. der jeweiligen Abzweigung der Querfossa 70 je eine Grube 74 und 76 gebildet wird. Auch diese Gruben sind gegeneinander versetzt.

Wie der zweite Molar des Oberkiefers weist auch der erste Molar des Oberkiefers einen leicht parallelogrammförmig verformten Aufbau auf, der besonders gut in Eingriff mit dem nahezu quadratischen Aufbau der Höcker des Unterkiefer-Antagonisten zusammenarbeiten kann. Der erste Molar ist jedoch bevorzugt in mesio-distaler Richtung etwas länger, beispielsweise um etwa 2 bis 10%, bevorzugt um etwa 8% und insgesamt etwas größer.

In Fig. 2 sowie 3 sind drei Punkte 80 auf dem Stampfhöcker 24 angedeutet, die in tripodisierter Interkuspidation in Anlage an den entsprechenden drei Punkten in einer Grube der Unterkiefer-Antagonisten geraten.

Aus Fig. 4 ist ersichtlich, wie in der vorgesehenen Ausführungsform der zweite Oberkiefer-Prämolar 85 gestaltet sein kann. Es ist eine Zentralfossa 50 vorgesehen, die Nebenfossae 84 aufweist, die jedoch deutlich weniger markant sind und lediglich Einschnitte in den bukkalen Höcker 86 und den lingualen Höcker 88 bilden.

Die Zentralfossa 50 bildet praktisch eine Arte Symmetrieachse für den zweiten Prämolaren in mesio-distaler Richtung. Bezogen auf diese Zentralfossa 50 liegt der bukkale Höcker 86 mittig quer ab. Demgegenüber ist der linguale Höcker 88 deutlich nach mesial verlagert.

Es versteht sich, daß bei Bedarf auch ohne weiteres der Höcker 86 nach distal verlagert sein kann. Durch diese Verlagerung können die entsprechenden Höcker der Unterkiefer-Antagonisten leichter für die Laterotrusion schräg seitlich bewegt werden.

Eine entsprechende Verlagerung der Höcker 88 und 86 besteht auch bei dem in Fig. 5 dargestellten ersten Prämolaren 85 des Oberkiefers.

Der in Fig. 6 dargestellte zweite Molar 14 des Unterkiefers weist neben den mesialen Höckern 26 und 60 distale Höcker 90 und 92 an bukkaler bzw. lingualer Position auf. Bei diesem Zahn erstrecken sich Zentralfossa 50 und Querfossa 70 je im wesentlichen senkrecht zueinander, und ziemlich genau in der Mitte des Zahnes ist die Grube 45 an der Kreuzung der beiden genannten Fossae 50 und 70 vorgesehen, die mit dem Stampfhöcker 24 in tripodisierter Interkuspidation an den Punkten 80 in Eingriff gelangen kann. Es ist ersichtlich, daß aufgrund des Versatzes der Höcker beim Oberkiefer-Antagonisten 12 nicht nur ein Versatz in mesio-distaler Richtung, sondern auch ein Versatz in bukko-lingualer Richtung besteht, der das Herausund Hereindrehen des Zahnes in die Okklusionsstellung erleichtert.

Der in Fig. 7 dargestellte erste Molar des Unterkiefers weist eine entsprechende Ausgestaltung zu dem zweiten Molaren des Unterkiefers auf. Auch hier sind gleiche Teile mit gleichen Bezugszeichen dargestellt, und der erste Molar ist etwas größer als der zweite Molar. Zusätzlich weist der erste Molar an disto-bukkale Position eine nach außen verlaufende Furche 94 auf, die verhindert, daß eine allzu lange gerade Fläche in mesio-distaler Richtung an dem Hang des Höckers 90 besteht. Ferner weist der erste Molar des Unterkiefers drei bukkale Höcker 26, 90 und 93 auf.

Wie aus Fig. 7 ersichtlich ist, sind die lingualen Höcker 60 und 92 des ersten Molaren des Unterkiefers relativ stark voneinander beabstandet, so daß die Querfossa 70 an dieser Stelle recht breit ist. Der Abstand der Spitzen der Höcker 60 und 92 ist größer als der Abstand der Spitzen der bukkalen Höcker 26 und 90. Hierdurch kann sich der Stampfhöcker 24 des ersten Oberkiefer-Molaren leicht durch die Querfossa 70 bewegen, ohne frühzeitig an den lingualen Höckern des Unterkiefers anzustoßen und kann somit den harmonischen Bewegungsablauf nicht behindern.

Es versteht sich, daß eine entsprechende Ausgestaltung auch für den in Fig. 6 dargestellten zweiten Molaren des Unterkiefers vorgesehen sein kann.

In Fig. 8 ist der zweite Prämolar 95 des Unterkiefers dargestellt, der durch drei einander gegenüberliegende Höcker 87 und 88 lingual und 86 bukkal in seiner Position bestimmt wird, die durch eine Zentralfossa 50 getrennt sind. An voneinander beabstandeten Stellen sind Querfurchen 84 der Zentralfossa 50 vorgesehen, die in ihren Kreuzungsbereichen Gruben 96 und 98 bilden. Es ist vorgesehen, daß der linguale Höcker 88 des zweiten Prämolaren des Oberkiefers in die Grube 96 in Anlage gerät, so daß auch hier eine gute Zerkleinerungswirkung möglich ist.

Der in Fig. 9 dargestellte erste Prämolar 95 des Unterkiefers ist wiederum entsprechend dem in Fig. 8 dargestellten zweiten Prämolar ausgebildet, und auch hier weisen gleiche Bezugszeichen auf gleiche Teile hin.

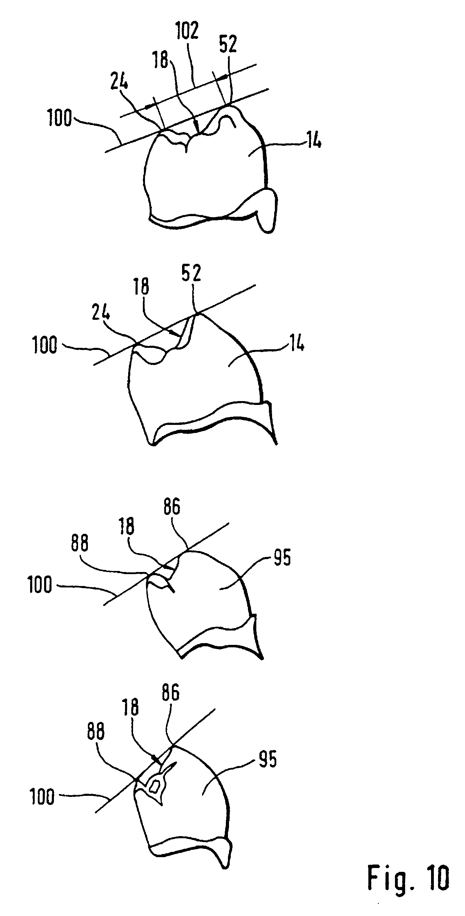

Wie aus Fig. 10 ersichtlich ist, ist die Höckerneigung der Unterkiefer-Zähne unterschiedlich. In der Darstellung gemäß Fig. 10 soll die Campersche Ebene waagerecht verlaufen, und die Höckerneigung des ersten Prämolaren 95 beträgt etwa 40°±3° bezogen auf die Campersche Ebene. Die Höckerneigung ist durch eine Gerade 100 festgelegt, die über den lingualen Höcker 88 und den bukkalen Höcker 86 gelegt wird, oder, im Falle von Molaren, über den mesio-lingualen Höcker 60 und den mesio-bukkalen Höcker 26. Die Höckerneigung beträgt bei dem zweiten Prämolaren 95, der über dem ersten Prämolaren 95 dargestellt ist, 33°±3°. Beim ersten Molaren 14, der in Fig. 10 über dem zweiten Prämolaren dargestellt ist, beträgt die Höckerneigung 27°±3°, und beim zweiten Molaren 14, der darüber dargestellt ist, etwas weniger.

Demnach besteht in sagittaler Richtung betrachtet um eine sagittale Achse eine Verwindung der Kaufläche 18. Ferner aus Fig. 10 ersichtlich, daß die Kauflächenbreite 102 sich in bukko-lingualer Richtung zwischen der Spitze des bukkalen Höckers 26 und der des lingualen Höckers 60, oder zwischen den Spitzen der distalen Höcker 90 und 92 erstreckt.

## Patentansprüche

1. Zahnsatz aus vorgefertigten Zähnen, mit Molaren und/oder Prämolaren je für Oberkiefer und Unterkiefer, bei denen mindestens die Oberkiefer-Molaren (12) an lingualer Position einen Stampfhöcker (24) aufweisen, der je in Okklusionsstellung für den Eingriff in die Kaufläche (18) des jeweiligen Unterkiefer-Antagonisten bestimmt ist, **dadurch gekennzeichnet, daß** die Kaufläche (18) des Antagonisten (14) eine Grube (45) mit mindestens teilweise konvex gewölbten Bereichen (20, 22) aufweist, über die der Antagonist (14) in Mehrfachkontakt-Interkuspidation an dem Stampfhöcker (24) zentrierbar ist, und daß ein dritter Berührungspunkt für die Mehrfachkontakt-Interkuspidation durch Anlage an einem von dem Stampfhöcker beabstandeten bukkalen Höcker (52) gebildet ist.

2. Zahnsatz nach Anspruch 1 **dadurch gekennzeichnet, daß** sich an die mindestens teilweise konvex gewölbten Bereiche (20, 22) des Antagonisten konkav gewölbte Bereiche (36, 38) zur Bildung eines interkoronalen Freiraums (46) mindestens in bukko-lingualer Richtung, insbesondere auch in mesio-distaler Richtung anschließen.

3. Zahnsatz nach einem der vorhergehenden Ansprüche, **dadurch gekennzeichnet, daß** der dritte Berührungspunkt für die tripodisierte Interkuspidation durch Anlage an einem von dem Stampfhöcker beabstandeten bukkalen Höcker (52) gebildet ist.

4. Zahnsatz nach einem der vorhergehenden Ansprüche, **dadurch gekennzeichnet, daß** in der Interkuspidation ein bukkaler Unterkieferhöcker (26) in Anlage mit der bukkalen Seite der Zentralfossa (48) des Oberkieferantagonisten (12) gerät.

5. Zahnsatz nach einem der vorhergehenden Ansprüche, **dadurch gekennzeichnet, daß** der Abstand zwischen der Zentralfossa (48) und den lingualen Höckern (24) der Oberkiefer-Zähne (12), insbesondere der Molaren, kleiner als der Abstand zwischen der Zentralfossa (50) und den bukkalen Höckern (26) der Unterkiefer-Zähne (14), insbesondere der Molaren, ist.

6. Zahnsatz nach einem der vorhergehenden Ansprüche, **dadurch gekennzeichnet, daß** die Kauflächenbreite der Unterkiefer-Zähne (14) zwischen 4,8 und 6,0 mm, insbesondere zwischen 5,0 und 5,8 mm, für die Prämolaren (95) und zwischen 5,7 und 7,0 mm, insbesondere zwischen 5,9 und 6,8 mm, für die Molaren (12), beträgt, je abhängig von der Größe des Zahnsatzes.

7. Zahnsatz nach einem der vorhergehenden Ansprüche, **dadurch gekennzeichnet, daß** die Kauflächenbreite der Oberkiefer-Zähne (14) zwischen 4,8 und 7,3 mm, insbesondere zwischen 5,0 und 7,1 mm, für die Prämolaren (95) und zwischen 6,2 und 7,8 mm, insbesondere zwischen 6,4 und 7,6 mm für die Molaren (12), beträgt, je abhängig von der Größe des Zahnsatzes.

8. Zahnsatz nach einem der vorhergehenden Ansprüche, **dadurch gekennzeichnet, daß** der Oberkiefer-Stampfhöcker (24) in Okklusionsstellung bei den Molaren (12) in der durch die Kreuzung zwischen einer Zentralfossa (50) und einer Querfossa (70) gebildeten Grube (45) des jeweiligen Unterkieferantagonisten (14) eingreift.

9. Zahnsatz nach einem der vorhergehenden Ansprüche, **dadurch gekennzeichnet, daß** sich an konvexe Bereiche (20, 22, 30, 32, 34) anschließende konkave Bereiche (36, 38, 40, 42) sowohl an den Flanken der Unterkiefer- (26, 60) als auch der Oberkiefer-Höcker (52, 24) vorgesehen sind, zwischen welchen Flanken mindestens teilweise Fossae (48, 50) oder Furchen ausgebildet sind.

10. Zahnsatz nach einem der vorhergehenden Ansprüche, **dadurch gekennzeichnet, daß** die Molaren (12, 14) drei bis fünf Höcker (24, 52, 66, 68; 26, 60, 90, 92) und die Prämolaren zwei bis drei Höcker (86, 88) aufweisen.

11. Zahnsatz nach einem der vorhergehenden Ansprüche, **dadurch gekennzeichnet, daß** die Unterkiefer-Prämolaren zwei für den Eingriff eines Höckers des Antagonisten vorgesehene Gruben (96, 98) und die Oberkiefer-Prämolaren eine sich mesio-distal erstreckende Fossa (50) aufweisen.

12. Zahnsatz nach einem der vorhergehenden Ansprüche, **dadurch gekennzeichnet, daß** mindestens 2, insbesondere alle Prämolaren je eine Zentralfossa (50) aufweisen.

13. Zahnsatz nach einem der vorhergehenden Ansprüche, **dadurch gekennzeichnet, daß** mindestens die ersten, insbesondere beide Oberkiefer-Molaren zwei gegeneinander versetzte Gruben (74, 76) aufweisen, wobei eine Grube (76) an mesio-bukkaler Position und eine Grube (74) an disto-lingualer Position vorgesehen ist, die mit einer Zentralfossa (50) miteinander verbunden sind, die sich leicht schräg in mesio-bukkaler/disto-lingualer Richtung erstreckt, wobei von der mesio-bukkalen Grube (76) eine Querfossa (70) in bukkaler Richtung verläuft, und von der disto-lingualen Grube (74) eine Querfossa (70) in lingualer Richtung verläuft.

14. Zahnsatz nach einem der vorhergehenden Ansprüche, **dadurch gekennzeichnet, daß** der Stampfhöcker (24) an mesio-lingualer Position ausgebildet ist.

15. Zahnsatz nach einem der vorhergehenden Ansprüche, **dadurch gekennzeichnet, daß** der erste Oberkiefer-Molar (12) an dem disto-bukkalen Höcker (66) eine ausgeprägte Vorwölbung (73) in Richtung der Zentralfossa aufweist.

16. Zahnsatz nach einem der vorhergehenden Ansprüche, **dadurch gekennzeichnet, daß** der erste Unterkiefer-Molar (14) an disto-bukkaler Position eine zusätzliche Fossa (94) aufweist, die schräg nach disto-bukkal verläuft.

17. Zahnsatz nach einem der vorhergehenden Ansprüche, **dadurch gekennzeichnet, daß** in Okklusionsstellung die Stampfhöcker (24) deutlich beabstandet von dem Rand der Kaufläche (18) des Antagonisten (14) eingreifen, insbesondere innerhalb der mittleren 60 % der mesio-distalen Länge der Kaufläche (18).

18. Zahnsatz nach einem der vorhergehenden Ansprüche, **dadurch gekennzeichnet, daß** die Spitze des lingualen Höckers (88) eines Oberkiefer-Prämolaren bezogen auf die mittlere Seitenposition zu der Zentralfossa (50) dieses Zahnes nach mesial versetzt ist, insbesondere um 5 bis 30°, bevorzugt um 15°.

19. Zahnsatz nach einem der vorhergehenden Ansprüche, **dadurch gekennzeichnet, daß** die Spitze des bukkalen Höckers (86) des ersten Oberkiefer-Prämolaren bezogen auf die mittlere Seitenposition zu der Zentralfossa (50) dieses Zahnes nach distal versetzt ist, insbesondere um 5 bis 30°, bevorzugt um etwa 15°.

20. Zahnsatz nach einem der vorhergehenden Ansprüche, **dadurch gekennzeichnet, daß** die lingualen Höcker (92, 60) der Unterkiefer-Molaren (14) im Vergleich zu den bukkalen Höckern (90, 26) zum Zahnrand hin verlagert sind, so daß ihre Spitzen in mesio-distaler Richtung weiter voneinander beabstandet ist als die Spitzen der bukkalen Höcker (90, 26) des Unterkiefer-Molaren (14).

21. Zahnsatz nach einem der vorhergehenden Ansprüche, **dadurch gekennzeichnet, daß** insbesondere beim Unterkiefer die in sagittaler Richtung betrachtete Höckerneigung vom ersten Prämolar zum zweiten Molar (14) kontinuierlich abnimmt, und daß insbesondere der erste Prämolar (95) eine Höckerneigung von etwa 40°±3° bezogen auf die Campersche Ebene, der zweite Prämolar (95) von 33°±3°, der erste Molar (14) von 27°±3° und der zweite Molar (14) eine fast identische oder etwas flachere Höckerneigung gegenüber dem ersten Molar (14) aufweist.

22. Zahnsatz nach einem der vorhergehenden Ansprüche, **dadurch gekennzeichnet, daß** die Höcker (24, 52, 66, 68) des Oberkiefer-Molaren (12) ungefähr ein Parallelogramm aufspannen, dessen längste Erstreckung insbesondere von mesio-bukkal nach disto-lingual verläuft.

23. Zahnsatz nach einem der vorhergehenden Ansprüche, **dadurch gekennzeichnet, daß** die Höcker (26, 60, 90, 92) des Unterkiefer-Molaren (14) ein Rechteck, insbesondere zumindest nahezu ein Quadrat, aufspannen.

## Claims

1. A dental assembly of prefabricated teeth, with molars and/or premolars respectively for the upper jaw and lower jaw, in which at least the upper jaw molars (12) have in the lingual position a crushing cusp (24) which respectively in the occlusion position is intended for engagement in the masticatory surface (18) of the respective lower jaw antagonist, **characterised in that** the masticatory surface (18) of the antagonist (14) has a fossa (45) with at least partly convexly curved zones (20,22), via which the antagonist (14) can be centred on the crushing cusp (24) in multiple contact intercuspidation, and **in that** a third point of contact for the multiple contact intercuspidation is formed by application against a buccal cusp (52) spaced apart from the crushing cusp.

2. A dental assembly according to Claim 1, **characterised in that** the at least partly convexly curved zones (20,22) of the antagonist are adjoined by concavely curved zones (36,38) to form an intercoronal free space (46) at least in the buccolingual direction, in particular also in mesial-distal direction.

3. A dental assembly according to any one of the preceding Claims, **characterised in that** the third contact point for the tripodised intercuspidation is formed by application against a buccal cusp (52) spaced apart from the crushing cusp.

4. A dental assembly according to any one of the preceding Claims, **characterised in that** in the intercuspidation a buccal lower jaw cusp (26) comes into contact with the buccal side of the central fossa (48) of the upper jaw antagonist (12).

5. A dental assembly according to any one of the preceding Claims, **characterised in that** the distance between the central fossa (48) and the lingual cusps (24) of the upper jaw teeth (12) in particular the molars, is smaller than the distance between the central fossa (50) and the buccal cusps (26) of the lower jaw teeth (14), in particular the molars.

6. A dental assembly according to any one of the preceding Claims, **characterised in that** the width of chewing surface of the lower jaw teeth (14) is between 4.8 and 6.0 mm, in particular between 5.0 and 5.8 mm, for the premolars (95) and between 5.7 and 7.0 mm, in particular between 5.9 and 6.8 mm, for the molars (12), in each case depending on the size of the dental assembly.

7. A dental assembly according to any one of the preceding Claims, **characterised in that** the width of chewing surface of the upper jaw teeth (14) [sic] is between 4.8 and 7.3 mm, in particular between 5.0 and 7.1 mm, for the premolars (95) and between 6.2 and 7.8 mm, in particular between 6.4 and 7.6 mm, for the molars (12), in each case depending on the size of the dental assembly.

8. A dental assembly according to any one of the preceding Claims, **characterised in that** in the occlusion position in the case of the molars (12) the upper jaw crushing cusp (24) engages in the fossa (45) of the respective lower jaw antagonist (14) formed by the intersection between a central fossa (50) and a transverse fossa (70).

9. A dental assembly according to any one of the preceding Claims, **characterised in that** concave zones (36,38,40,42) adjoining convex zones (20,22,30,32,34) are provided both on the flanks of the lower jaw cusps (26,60) and of the upper jaw cusps (52,24), between which flanks at least partly fossae (48,50) or furrows are formed.

10. A dental assembly according to any one of the preceding Claims, **characterised in that** the molars (12,14) have three to five cusps (24,52,66,68; 26,60,90,92) and the premolars have two to three cusps (86,88).

11. A dental assembly according to any one of the preceding Claims, **characterised in that** the lower jaw premolars have two fossae (96,98) provided for the engagement of a cusp of the antagonist and the upper jaw premolars have a fossa (50) extending in the mesial-distal direction.

12. A dental assembly according to any one of the preceding Claims, **characterised in that** at least two premolars, in particular all premolars, each have a central fossa (50).

13. A dental assembly according to any one of the preceding Claims, **characterised in that** at least the first, particularly both, upper jaw molars have two mutually offset fossae (74,76), wherein one fossa (76) is provided in a mesial-buccal position and one fossa (74) is provided in a distal-lingual position, which are joined together by a central fossa (50) which extends slightly inclined in the mesial-buccal/distal-lingual direction, wherein a transverse fossa (70) extends from the mesial-buccal fossa (76) in the buccal direction, and a transverse fossa (70) extends from the distal-lingual fossa (74) in the lingual direction.

14. A dental assembly according to any one of the preceding Claims, **characterised in that** the crushing cusp (24) is formed in a mesial-lingual position.

15. A dental assembly according to any one of the preceding Claims, **characterised in that** the first upper jaw molar (12) has on the distal-buccal cusp (66) a pronounced protrusion (73) in the direction of the central fossa.

16. A dental assembly according to any one of the preceding Claims, **characterised in that** the first lower jaw molar (14) has in the distal-buccal position an additional fossa (94) which extends obliquely in the distal-buccal direction.

17. A dental assembly according to any one of the preceding Claims, **characterised in that** in the occlusion position the crushing cusps (24) engage clearly spaced apart from the.edge of the masticatory surface (18) of the antagonist (14), in particular within the middle 60 % of the mesial-distal length of the masticatory surface (18).

18. A dental assembly according to any one of the preceding Claims, **characterised in that** the tip of the lingual cusp (88) of an upper jaw premolar is offset in mesial direction in relation to the middle lateral position relative to the central fossa (50) of this tooth, in particular by 5 to 30°, preferably by 15°.

19. A dental assembly according to any one of the preceding Claims, **characterised in that** the tip of the buccal cusp (86) of the first upper jaw premolar is offset in distal direction in relation to the middle lateral position relative to the central fossa (50) of this tooth, in particular by 5 to 30°, preferably by approximately 15°.

20. A dental assembly according to any one of the preceding Claims, **characterised in that** the lingual cusps (92,60) of the lower jaw molars (14) are displaced compared to the buccal cusps (90,26) towards the tooth edge so that their tips are spaced further apart from one another in the mesial-distal direction than the tips of the buccal cusps (90,26) of the lower jaw molars (14).

21. A dental assembly according to any one of the preceding Claims, **characterised in that**, particularly in the case of the lower jaw, the cusp inclination viewed in sagittal direction, decreases continuously from the first premolar to the second molar (14), and **in that** particularly the first premolar (95) has a cusp inclination of approximately 40°±3° in relation to the Campersche plane, the second premolar (95) has a cusp inclination of 33°±3°, the first molar (14) has a cusp inclination of 27°±3° and the second molar (14) has an almost identical or slightly more shallow cusp inclination with respect to the first molar (14).

22. A dental assembly according to any one of the preceding Claims, **characterised in that** the cusps (24,52,66,68) of the upper jaw molar (12) extend approximately to form a parallelogram, the longest extension of which extends in particular from mesial-buccal to distal-lingual.

23. A dental assembly according to any one of the preceding Claims, **characterised in that** the cusps (26,60,90,92) of the lower jaw molars (14) extend to form a rectangular, in particular at least approximately a square.

## Revendications

1. Arrangement de dents à partir de dents préfabriquées, comportant des molaires et/ou des prémolaires pour le maxillaire supérieur et pour le maxillaire inférieur, dans lequel au moins les molaires (12) du maxillaire supérieur présentent une bosse de broyage (24) en position linguale conçue pour créer dans chaque position d'occlusion un engrènement avec la surface de mastication (18) de chaque antagoniste correspondante du maxillaire inférieur, **caractérisé en ce que** la surface de mastication (18) de l'antagoniste (14) présente un sillon (45) doté de zones au moins partiellement voûtées de manière convexe (20, 22) via lesquelles l'antagoniste (14) peut être centré en intercuspidation avec contacts multiples sur la bosse de broyage (24) et **en ce qu'**un troisième point de mouvement est formé pour l'intercuspidation avec contacts multiples par apposition sur une bosse buccale (52) se trouvant écartée de la bosse de broyage.

2. Arrangement de dents selon la revendication 1 **caractérisé en ce que** des zones voûtées de manière concave (36, 38) entrent en contact avec les zones au moins en partie voûtées de manière convexe (20, 22) au moins pour former un espace libre intercoronaire (46) en direction bucco-linguale, en particulier aussi en direction mésio-distale.

3. Arrangement de dents selon l'une des revendications précédentes, **caractérisé en ce que** le troisième point de mouvement pour l'intercuspidation à trois positions est formé par apposition sur une bosse buccale (52) se trouvant écartée de la bosse de broyage.

4. Arrangement de dents selon l'une des revendications précédentes, **caractérisé en ce que** dans l'intercuspication une bosse buccale du maxillaire inférieur (26) est prise dans la face buccale de la fosse centrale (48) de l'antagoniste du maxillaire supérieur (12).

5. Arrangement de dents selon l'une des revendications précédentes, **caractérisé en ce que** l'écart entre la fosse centrale (48) et les bosses linguales (24) des dents du maxillaire supérieur (12), en particulier des molaires, est plus petit que l'écart entre la fosse centrale (50) et les bosses buccales (26) des dents du maxillaires inférieur (14), en particulier des molaires.

6. Arrangement de dents selon l'une des revendications précédentes, **caractérisé en ce que** la largeur des surfaces de mastication des dents du maxillaire inférieur (14) est comprise entre 4,8 et 6,0 mm, plus précisément entre 5,0 et 5,8 mm pour les prémolaires (95) et entre 5,7 et 7,0 mm, plus précisément entre 5,9 et 6,8 mm, pour les molaires (12), indépendamment de la taille de l'arrangement de dents.

7. Arrangement de dents selon l'une des revendications précédentes, **caractérisé en ce que** la largeur des surfaces de mastication des dents du maxillaire supérieur (14) est comprise entre 4,8 et 7,3 mm, plus précisément entre 5,0 et 7,1 mm pour les prémolaires (95) et entre 6,2 et 7,8 mm, plus précisément entre 6,4 et 7,6 mm, pour les molaires (12), indépendamment de la taille de l'arrangement de dents.

8. Arrangement de dents selon l'une des revendications précédentes, **caractérisé en ce que** la bosse de broyage du maxillaire supérieur (24) entre en engrènement en position d'occlusion au niveau des molaires (12) dans le sillon (45) de l'antagoniste du maxillaire inférieur (14) formé par le croisement entre une fosse centrale (50) et une fosse transversale (70).

9. Arrangement de dents selon l'une des revendications précédentes, **caractérisé en ce que** des zones concaves (36, 38, 40, 42) sont fournies qui entrent en contact avec des zones convexes (20, 22, 30, 32, 34) aussi bien au niveau des bosses du maxillaire inférieur flanquant (26, 60) qu'au niveau des bosses du maxillaire supérieur (52, 24), entre les flancs desquelles sont formées au moins partiellement des fosses (48, 50) ou sillons.

10. Arrangement de dents selon l'une quelconques des revendications précédentes, **caractérisé en ce que** les molaires (12, 14) présentent trois à cinq bosses (24, 52, 66, 68, 26, 60, 90, 92) et les prémolaires deux à trois bosses (86, 88).

11. Arrangement de dents selon l'une des revendications précédentes, **caractérisé en ce que** les prémolaires du maxillaire inférieur présentent deux sillons (96, 98) pour engrènement avec une bosse de l'antagoniste et les prémolaires du maxillaire supérieur présentent une fosse (50) s'étendant en direction mésio-distale.

12. Arrangement de dents selon l'une des revendications précédentes, **caractérisé en ce que** au moins 2, en particulier toutes les prémolaires présentent une fosse centrale (50).

13. Arrangement de dents selon l'une des revendications précédentes, **caractérisé en ce qu'**au moins les premières, en particulier les deux premières molaires du maxillaire supérieur présentent deux sillons (74, 76) alternés, dans lequel un sillon (76) est en position mésio-buccale et l'autre sillon (74) est en position disto-linguale, ceux-ci étant reliés avec une fosse centrale (50) s'étendant légèrement en biais en direction mésio-buccale/disto-linguale, et dans lequel une fosse transversale (70) s'étend en direction buccale depuis le sillon mésio-buccal (76) et une fosse transversale (70) s'étend en direction linguale depuis le sillon disto-lingual (74).

14. Arrangement de dents selon l'une des revendications précédentes, **caractérisé en ce que** la bosse de broyage (24) est formée en position mésiolinguale.

15. Arrangement de dents selon l'une des revendications précédentes, **caractérisé en ce que** la première molaire du maxillaire supérieur (12) présente une voûte antérieure marquée (73), en direction de la fosse centrale, au niveau de la bosse disto-buccale (66).

16. Arrangement de dents selon l'une des revendications précédentes, **caractérisé en ce que** la première molaire (14) du maxillaire inférieur présente en position disto-buccale une fosse supplémentaire (94) s'étendant en biais en direction disto-buccale.

17. Arrangement de dents selon l'une des revendications précédentes, **caractérisé en ce que** les bosses de broyage (24) entrent en engrènement en position occlusale de manière nettement écartée du bord de la surface de mastication (18) de l'antagoniste (14), en particulier dans les 60 % de la partie médiane de la longueur mésio-distale de la surface de mastication (18).

18. Arrangement de dents selon l'une des revendications précédentes, **caractérisé en ce que** le sommet de la bosse linguale (88) d'une prémolaire du maxillaire supérieur est déplacé en direction mésiale par rapport à la position latérale médiane de la fosse centrale (50) de cette dent, en particulier selon un angle compris entre 5 et 30°, de préférence selon un angle de 15°.

19. Arrangement de dents selon l'une des revendications précédentes, **caractérisé en ce que** le sommet de la bosse buccale (86) de la première prémolaire du maxillaire supérieur est déplacé en direction distale par rapport à la position latérale médiane de la fosse centrale (50) de cette dent, selon un angle compris entre 5 et 30° en particulier, de préférence selon un angle de 15°.

20. Arrangement de dents selon l'une des revendications précédentes, **caractérisé en ce que** les bosses linguales (92, 60) des molaires du maxillaire inférieur (14) en comparaison avec les bosses buccales (90, 26) sont placées par rapport au bord des dents de telle sorte que leurs sommets soient plus écartés les uns des autres en direction mésio-distale que les sommets des bosses buccales (90, 26) des molaires (14) du maxillaire inférieur.

21. Arrangement de dents selon l'une des revendications précédentes, **caractérisé en ce qu'**en particulier pour le maxillaire inférieur les inclinaisons de bosses en direction sagittale augmentent de manière continue depuis la première prémolaire jusqu'à la deuxième molaire (14), et en particulier **en ce que** la première prémolaire (95) présente une inclinaison de bosse par rapport au plan de Camper de 40° ± 3°, la deuxième prémolaire (95) présente une inclinaison de bosse de 37° ± 3°, la première molaire (14) présente une inclinaison de bosse de 27° ± 3° et la deuxième molaire (14) présente une inclinaison de bosse presque identique ou un peu plus plate par rapport à la première molaire (14).

22. Arrangement de dents selon l'une des revendications précédentes, **caractérisé en ce que** les bosses (24, 52, 66, 68) des molaires du maxillaire supérieur (12) forment approximativement un parallélogramme, dont la plus grande prolongation s'étende en particulier de la direction mésio-buccale vers la direction disto-linguale.

23. Arrangement de dents selon l'une des revendications précédentes, **caractérisé en ce que** les bosses (26, 60, 90, 92) de la molaire du maxillaire inférieur (14) forment un rectangle, en particulier du moins à peu près un carré.
